# EUROPÄISCHE PATENTSCHRIFT

(11) **EP 1 236 257 B1**
(45) Veröffentlichungstag und Bekanntmachung des Hinweises auf die Patenterteilung: **18.02.2004**
(21) Anmeldenummer: 00981062.3
(22) Anmeldetag: 23.11.2000
(51) Int. Cl.: H02H 1/00

(54) **ÜBERWACHUNGSEINHEIT FÜR STROMVERSORGUNGEN**
MONITORING DEVICE FOR POWER SUPPLIES
UNITE DE SURVEILLANCE POUR ALIMENTATIONS ELECTRIQUES

(30) Priorität: 01.12.1999 AT 202399
(43) Veröffentlichungstag der Anmeldung: 04.09.2002
(73) Patentinhaber: Siemens AG Österreich, 1210 Wien (AT)
(72) Erfinder: SCHWEIGERT, Harald, A-1120 Wien (AT)
(74) Vertreter: Matschnig, Franz, Dipl.-Ing.
(86) Internationale Anmeldenummer: PCT/AT2000/000318
(87) Internationale Veröffentlichungsnummer: WO 2001/041277

(56) Entgegenhaltungen:
- DE-A- 19 703 236
- DE-U- 29 909 206

## Beschreibung

Die Erfindung bezieht sich auf eine Überwachungseinheit für Stromversorgungen, bei welcher eine Speisespannung über zumindest einen gesteuerten Schalter zu zwei oder mehr Ausgängen geführt ist und die Überwachungseinheit dazu eingerichtet ist, bei Änderungen von Spannungen und/oder Strömen über vorgebbare Toleranzwerte an zumindest einen Schalter ein Abschaltsignal zu liefern. Ebenso bezieht sich die Erfindung auf ein Stromversorgungsgerät.

In Industrieanlagen und in automatisierten Anlagen, z. B. einer Gebäudeautomatisierung, ist es von besonderer Bedeutung, dass die Speisespannungen den einzelnen Verbrauchern oder Verbrauchergruppen nach besonderen Sicherheitskriterien zugeführt werden. Insbesondere müssen informationsverarbeitende Teile eines Steuerungssystems, z. B. Mikroprozessorbaugruppen im Fehlerfall vorrangig mit der benötigten Energie versorgt werden. Bei vielen Industrieanwendungen beträgt die Speisespannung 24-Volt-Gleichspannung, doch sind auch andere Gleichspannungswerte üblich und auch Wechselspannungen, z. B. 115, 230 oder 24 Volt, in Verwendung.

Bei Kurzschlüssen oder Überlasten in Teilbereichen eines Steuerungssystems, z. B. in der Ausgabeperipherie, kann es leicht zu einem, meist zwar nur kurzen Gesamtausfall der Speisespannung des Steuerungssystems kommen, was oft zu einem Datenverlust in den von der Speisespannung versorgten zentralen Steuerungseinheiten führt.

Falls Speisespannungen über Netztransformatoren mit nachgeschalteten Gleichrichtern erzeugt werden, setzt man als Abschaltsicherungen Leitungsschutzschalter oder auch übliche Schmelzsicherungen ein. Die Eigenschaft von Transformatoren, kurzzeitig ein Vielfaches ihres Nennstromes liefern zu können, ermöglicht das Wegschalten eines Kreises mit Kurzschluss oder Überlast ohne Auslösen primärseitig vorgesehener Sicherungen. Es entsteht zwar - insbesondere bei Kurzschluss in einem Kreis - ein kurzzeitiger, in seiner Höhe von der Streuinduktivität des Transformators und von den Leitungsimpedanzen abhängiger Spannungseinbruch, doch kann man durch eine entsprechende Dimensionierung in den meisten Fällen einen sogenannten "Absturz" zentraler Steuereinheiten verhindern.

Der zunehmende Einsatz von Schaltnetzteilen, d.h. getakteter Stromversorgungen, aktualisiert das Problem allerdings erneut, da wegen der empfindlichen Elektronik die internen Regelkreise den Ausgangsstrom auf Werte begrenzen, welche nur geringfügig über dem Nennstrom liegen. Insbesondere besteht das Problem, dass die Sicherungen für die einzelnen Ausgänge nicht in ausreichend kurzer Zeit abschalten können. Zum raschen Abschalten benötigen Sicherungen oder Leistungsschutzschalter oft ein Vielfaches ihres Nennstromes. Diesen können die Schaltnetzteile jedoch nicht zusätzlich zu der übrigen Last liefern, sodass die gesamte Speisespannung einbricht - noch bevor eine Sicherung auslöst und der fehlerhafte Ausgang bzw. Zweig weggeschaltet wird. Solche in ihrer Höhe schwer schätzbare Spannungseinbrüche können dann zu den bereits erwähnten Abstürzen zentraler Steuerungseinheiten führen. Will man diese Gefahr ausschalten bzw. stark verringern, so bleibt noch der Weg, für jeden einzelnen Kreis, z. B. für Peripheriebaugruppen einerseits und eine CPU-Baugruppe andererseits, völlig getrennte Stromversorgungsgeräte bereitzustellen. Es versteht sich jedoch, dass diese Lösung äußerst aufwendig hinsichtlich ihrer Kosten und des benötigten Raumes und Gewichtes ist

Aus der DE 197 03 236 A1 der Anmelderin geht eine Schalteranordnung für ein Bordnetz von Kraftfahrzeugen hervor, bei welcher mehrere Stromverbraucher über eigene gesteuerte Schalter an eine gemeinsame Stromschiene angeschlossen sind. Über eine zentrale Steuereinheit, der auch Statussignale zugeführt sind, können Schalter selektiv abgeschaltet oder es kann der Strom in diesem Zweig begrenzt werden, um im Bedarfsfall kritische Lasten zu versorgen und weniger kritische Lasten abzuschalten.

In dem vorangemeldeten, nach dem Prioritätstag dieser Anmeldung veröffentlichten Dokument DE 299 09 206 U1 ist eine Schutzeinrichtung eines Niedervolt-Stromverteilungssystems beschrieben, bei welchem jedem Stromkreis ein elektronischer Schutzschalter mit einstellbarer Strombegrenzung als Kurzschluss- und/oder Überlastschutz zugeordnet ist Die Abschaltzeit der einzelnen Schalter kann zusätzlich über die Längsspannung an diesen Schaltern beeinflusst werden.

Die DE 298 19 235 U1 beschreibt eine Gleichspannungsversorgungseinheit, bei welcher der Ausgang einer stabilisierten Gleichspannungsversorgung je über elektronische Sicherungen an Verbraucher gelegt ist, wobei diese Sicherungen bei einem Strom auslösen, der kleiner als der Begrenzungswert der Versorgungseinheit ist.

Den vorbeschriebenen bekannten Lösungen ist somit zueigen, dass sie durch Beachtung des Stromes in den einzelnen Zweigen eine exakte und rasche Abschaltung in überlasteten Zweigen erreichen wollen, ohne die Speisespannungsversorgung zu gefährden.

Insbesondere dann, wenn die Speisespannung aus einem getakteten Netzgerät stammt, ist jedoch zu beachten, dass bei nominaler Auslastung der Speisespannungsversorgung auch verhältnismäßig geringe Überlasten bereits in einem Zweig zu einem Zusammenbruch der Speisespannung führen können. Beispielsweise ist in der obgenannten DE 299 09206U1 beschrieben, dass im Überlastfall in einem Zweig bei Überschreitung des Nennstroms um bis zu 100 % , d.h. bei doppeltem Nennstrom, ein Abschalten des betreffenden Zweiges erst nach 20 s erfolgen soll. Ein solcher Betriebs- bzw. Überlastzustand kann aber zu einem Einbruch der Speisespannung führen, wenn auch in den anderen Zweigen der Nennstrom fließt.

Eine Aufgabe der Erfindung liegt darin, eine einfache und kostengünstige Möglichkeit anzugeben, mehrere Ausgänge für unterschiedliche Zweige, ausgehend von einer einzigen Speisespannung zu versorgen und dabei ein selektives, "intelligentes" Abschalten einzelner Zweige zu ermöglichen, in welchen Kurzschlüsse oder Überlast auftreten, auch dann, wenn sämtliche anderen Zweige bereits Nennstrom führen.

Diese Aufgabe wird mit einer Überwachungseinheit der eingangs genannten Art gelöst, bei welcher erfindungsgemäß die Überwachungseinheit zum Vergleich der Speisespannung mit einer Referenzspannung und zur Abgabe eines Abschaltsignals an zumindest einen Schalter eingerichtet ist, falls die Speisespannung um einen vorgebbaren Wert absinkt.

Durch die Überwachung der Speisespannung und ein dementsprechend selektives Abschalten ist eine überaus flexible Lösung der vorhin geschilderten Probleme möglich. Insbesondere ist die Versorgung sensibler Kembereiche eines Systems, wie z. B. CPU-Baugruppen, trotz Auftretens von Fehlern in anderen Bereichen möglich. Spannungsabfälle der Speisespannung sind meist ein sicheres Indiz für Überlasten und können auch einfach erfasst werden.

Es kann empfehlenswert sein, falls die Überwachungseinheit dazu eingerichtet ist, Abschaltsignale an mehrere Schalter zu liefern, nämlich bei Absinken der Speisespannung um einen vorgebbaren Wert an einen ersten Schalter, sodann an einen zweiten Schalter, usf. jedoch bei einem Ansteigen der Speisespannung die Abschaltvorgänge zu beenden. Auf diese Weise lassen sich die einzelnen Ausgänge im Sinne einer vorgegebenen Priorität abschalten, nämlich zunächst jene Ausgänge, die für den Betrieb eines Systems unwichtigere Einheiten speisen bis hin zu jenem Ausgang, der eine CPU-Einheit speist.

Eine weitere einfache Möglichkeit zum selektiven Überwachen und Abschalten ergibt sich, falls die Überwachungseinheit auch zum Vergleich der an den gesteuerten Schaltern liegenden Restspannungen und zur Abgabe eines Abschaltsignals an Schalter eingerichtet ist, deren Restspannung über einen vorgebbaren Maximalwert steigt.

Aus ähnlichen Gründen kann auch eine Ausführung zweckmäßig sein, bei welcher die Überwachungseinheit auch zum Vergleich der nach den gesteuerten Schaltern liegenden Ausgangsspannungen mit Referenzspannungen und zur Abgabe eines Abschaltsignals an Schalter eingerichtet ist, deren zugehörige Ausgangsspannung unter einen vorgebbaren Wert absinkt.

Es kann weiters vorgesehen sein, dass die Speisespannung direkt zu einem Ausgang geführt ist. Von einem solchen, nicht abgesicherten Ausgang wird dann zweckmäßigerweise jene Baugruppe versorgt, deren Ausfall sich am störendsten auswirkt.

Eine einfach und sicher realisierbare Variante der Erfindung für kritische Anwendungen zeichnet sich dadurch aus, dass mindestens einem Ausgang ein Stromfühler zugeordnet ist und die Überwachungseinheit dazu eingerichtet ist, von den Stromfühlem gelieferte Signale zu überwachen und den gesteuerten Schalter in einem zu einem Ausgang führenden Zweig zu öffnen falls einerseits die Speisespannung unter einen vorgebbaren Grenzwert abgefallen ist, und andererseits der Strom in diesem Zweig einen vorgebbaren Grenzwert überstiegen hat.

Bei einer weiteren, in der Praxis flexiblen Ausführung ist vorgesehen, dass die Überwachungseinheit dazu eingerichtet ist, den zugehörigen Schalter zeitverzögert zu öffnen. Dabei kann zweckmäßigerweise vorgesehen sein, dass die Zeitverzögerung von dem Ausmaß der Überschreitung eines Nennstroms abhängig ist.

Falls die Stromfühler einstellbare Widerstände sind, kann der Benutzer für jeden Ausgang in Anpassung an die an diesem tatsächlich liegende Last auf einfache Weise einen Nennstrom einstellen.

Die gestellte Aufgabe wird auch mit einem Stromversorgungsgerät gelöst, welches eine Überwachungseinheit im Sinne einer oder mehrerer der oben genannten Merkmale besitzt.

Die Erfindung samt weiterer Vorteile ist im folgenden anhand beispielsweiser Ausführungen unter Bezugnahme auf die Zeichnung veranschaulicht. In dieser zeigen
- Fig. 1 ein vereinfachtes Blockschaltbild einer ersten Ausführungsform der Erfindung,
- Fig. 2 in einer ähnlichen Darstellung wie Fig. 1 eine zweite Ausführungsform der Erfindung,
- Fig. 3 in einer Darstellung ähnlich Fig. 1 und 2 eine dritte Ausführungsform der Erfindung,
- Fig. 4 in einer Darstellung ähnlich wie Fig. 1 und 2 eine vierte Ausführungsform der Erfindung,
- Fig. 5 in einem Diagramm das Abschalten von Ausgängen bei einer Ausführung nach Fig. 1,
- Fig. 6 ein ähnliches, auf Fig. 2 bezogenes Diagramm,
- Fig. 7 in einem Diagramm das zeitverzögerte Abschalten eines Ausganges und
- Fig. 8 ein ähnliches, auf Fig. 3 bezogenes Diagramm.

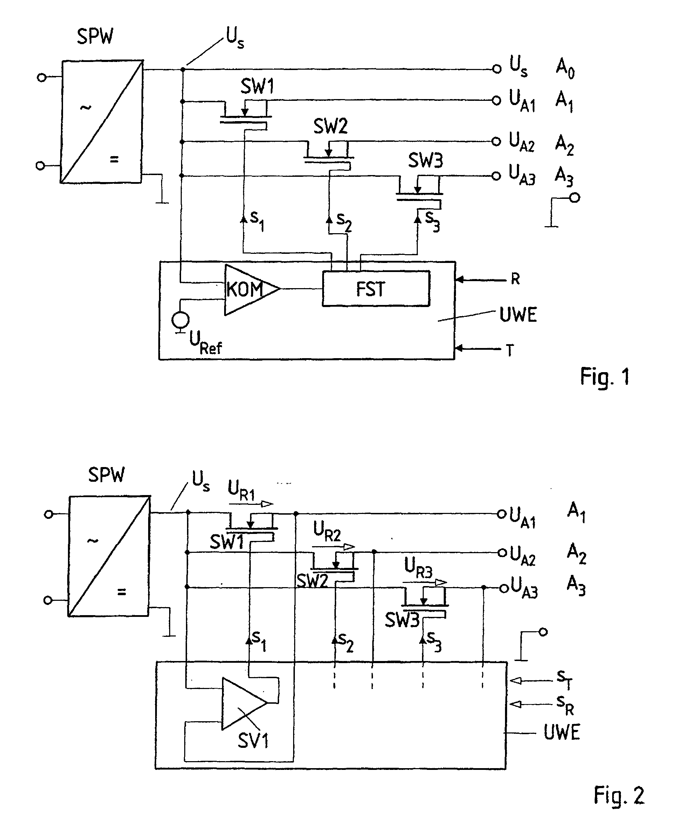

Gemäß Fig. 1 liefert ein getakteter Spannungswandler SPW eine Ausgangs- oder Speisespannung Us, beispielsweise 24 Volt, gegen Masse. Solche Spannungswandler oder Schaltnetzteile sind dem Fachmann in einer Vielzahl von Ausführungen bekannt und bilden an sich nicht den Gegenstand der Erfindung. Meist wird eine Eingangswechselspannung, z. B. 230 Volt, gleichgerichtet und die entstehende Gleichspannung wird über einen getakteten Schalter einer Primärwicklung eines Transformators zugeführt. Sekundärseitig erfolgt wieder eine Gleichrichtung auf die Speisespannung. Der Spannungswandler SPW arbeitet beispielsweise als Sperr- oder Flusswandler und ist meist auf konstante Ausgangsspannung geregelt. Es soll aber betont werden, dass die Erfindung nicht auf bestimmte Wandler eingeschränkt ist und dass die Speisespannung beispielsweise auch eine geregelte oder ungeregelte Wechselspannung sein kann.

Die Speisespannung Us ist einem ersten Ausgang A₀ unmittelbar zugeführt weiteren drei Ausgängen A₁, A₂ und A₃ jedoch je über gesteuerte Schalter SW1, SW2 und SW3, die von einer Überwachungseinheit UWE aus angesteuert sind. Die Schalter SW1 ... SW3 sind vorzugSWeise niederohmige Halbleiterschalter, wie MOS FET's, Bipolartransistoren oder abschaltbare Thyristoren, doch soll die Verwendung elektromechanischer Schalter, z. B. Relais, Transduktoren, nicht ausgeschlossen sein. Die Spannungen U_{S}, U_{A1}, U_{A2}, U_{A3} an den Ausgängen A₀....A₃ sind im normalen Betriebsfall praktisch gleich, sieht man von der Restspannung an den Schaltern SW1 ... SW3 ab.

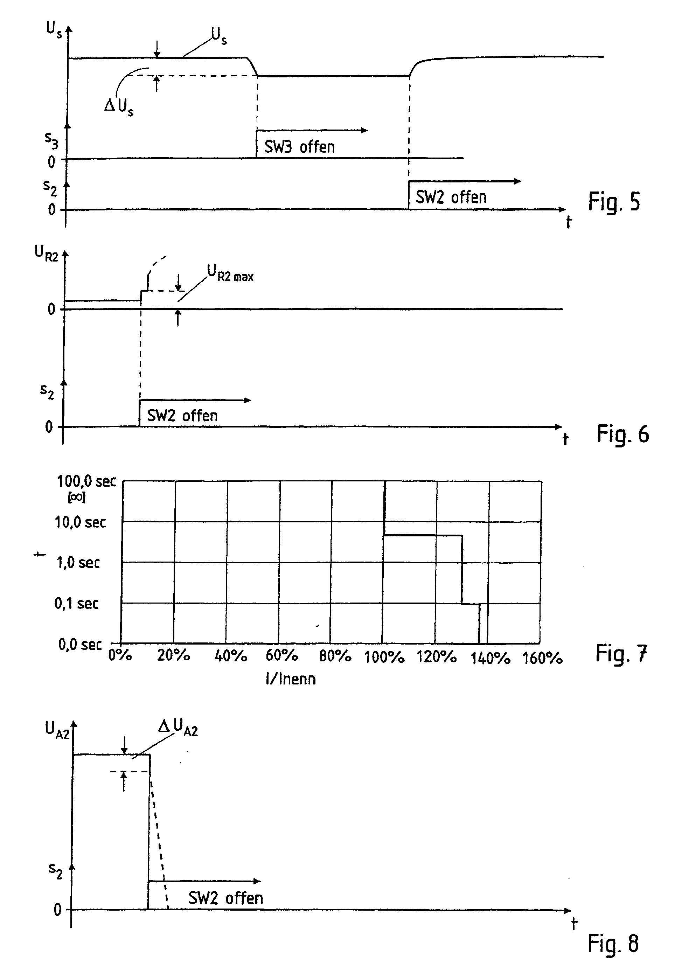

In der Überwachungseinheit UWE wird die Speisespannung Us oder ein Teil dieser Spannung mit einer Referenzspannung U_{Ref} verglichen, wozu, wie in Fig. 1, ein Komparator KOM dienen kann. Sinkt die Speisespannung Us um einen vorgebbaren Wert ΔU_{S} ab, so liefert der Komparator KOM ein Signal an eine Folgesteuerung FST, die daraufhin ein Schaltsignal s₃ an den ersten gesteuerten Schalter SW3 liefert und diesen öffnet, was aus Fig. 5 ersichtlich ist. Falls die Speisespannung Us in der Folge nicht ansteigt, wird über den Komparator KOM und die Folgesteuerung FST auch der zweite gesteuerte Schalter SW2 geöffnet, so dass nur noch an den Ausgängen A₀ und A₁ Spannungen liegen. Schließlich könnte auch der Schalter SW1 geöffnet werden. Sobald jedoch nach einem, z. B. wie hier, dem zweiten Ausschaltvorgang die Speisespannung wieder ansteigt, beendet die Überwachungseinheit weitere Abschaltvorgänge.

In Fig. 1 ist noch gezeigt, dass der Überwachungseinheit UWE ein externes Rücksetzsignal s_{R} zugeführt werden kann, welches die geöffneten Schalter wieder schließt. Außerdem kann der Überwachungseinrichtung ein externes Trennsignal s_{T} zugeführt werden, welches ein Abschalten aller oder einzelner Ausgänge unabhängig von Last- oder Kurzschlusszuständen ermöglicht.

Bei der in Fig. 2 dargestellten Ausführungsform wird nicht die Speisespannung Us überwacht, sondern es erfolgt ein Überwachen der Restspannungen U_{R1}, U_{R2}, U_{R3} der gesteuerten Schalter SW1, SW2, SW3. Die hier dargestellte Ausführung besitzt drei Ausgänge A₁, A₂, A₃, jedoch keinen direkt zur Speisespannung U_{S} geführten Ausgang. Ein solcher Ausgang, entsprechend dem Ausgang A₀, könnte natürlich auch hier vorgesehen sein. Die Ausführung nach Fig. 2 ist vor allem für Halbleiterschalter anwendbar, da hier genau definierte Restspannungen vorliegen. Die Überwachungseinheit UWE ist nur dazu eingerichtet, bei Ansteigen einer Restspannung, z. B. gemäß Fig. 6 der Restspannung U_{R2}, auf oder über einen vorgegebenen Maximalwert, U_{R2max}, den zugehörigen gesteuerten Schalter, hier wäre es SW2, zu öffnen.

In Fig. 2 ist beispielsweise ein Schaltverstärker SV1 eingezeichnet, der ein Schaltsignal si an den Schalter SW1 liefert, falls seine Eingangsspannung den Wert U_{R2max} übersteigt Natürlich stehen auch andere Lösungen, z. B. der Vergleich der Restspannungen mit Referenzspannungen in Komparatoren etc. zur Verfügung

Wie dem Diagramm der Fig. 6 entnehmbar, liegt bei Nennlast am Ausgang A₂ an dem gesteuerten Schalter SW2 eine geringe Restspannung U_{R2}, z. B. 20mV. Bei Überlast steigt diese Restspannung an und falls der Wert von z. B. 40mV überschritten wird, öffnet die Überwachungseinheit UWE den Schalter SW2 - die "Restspannung" springt dann natürlich auf den Wert V_{S}, was in Fig. 6 nur angedeutet ist. Auch bei dieser Ausführung können der Überwachungseinheit UWE Rücksetzsignale s_{R} oder Trennsignale s_{T} zugeführt werden.

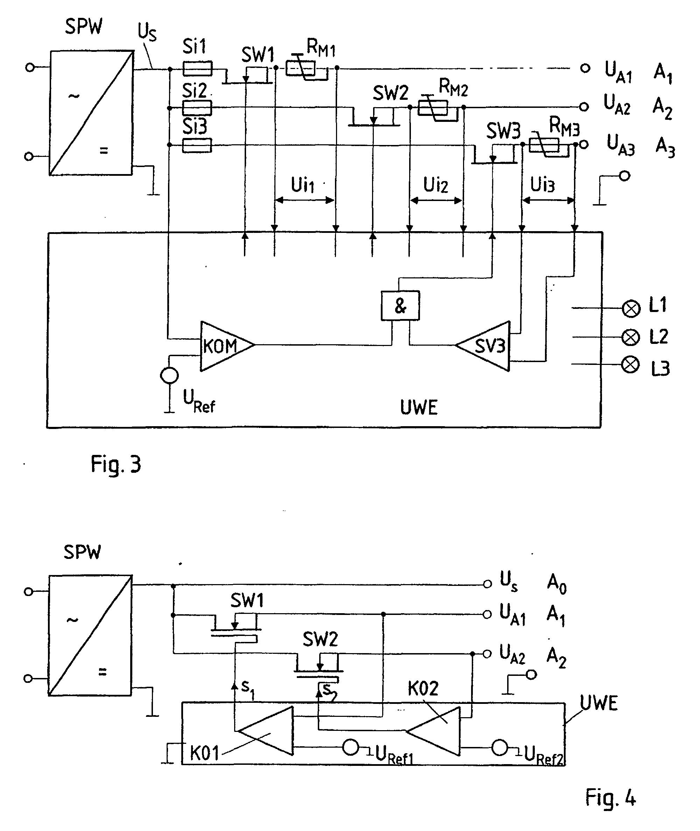

Im Gegensatz zu der Ausbildung nach Fig. 1 werden bei der Schaltung nach Fig. 2 - und auch bei der weiter unten noch behandelten nach Fig. 4 - genau jene Ausgänge abgeschaltet, an welchen eine Überlast oder ein Kurzschluss auftritt.

Bei der Variante nach Fig. 3 werden die Spannungen Uᵢ₁, Uᵢ₂, Uᵢ₃ an drei Messwiderständen R_{M1}, R_{M2}, R_{M3} überwacht, welche für jeden Ausgang A₁, A₂, A₃ je in Serie mit einer Sicherung Si1, Si2, Si3 - z. B. Schmelzsicherungen oder Sicherungsautomaten - sowie gesteuerten Schaltern SW1, SW2, SW3 liegen. Im Prinzip entspricht diese Schaltung jener nach Fig. 2, doch werden hier zur Strommessung eigene - und hier auch einstellbare - Widerstände verwendet.

Die den Strömen an den drei Ausgängen A₁, A₂, A₃ entsprechenden Spannungen U_{A1}, U_{A2}, U_{A3} können beispielsweise wiederum Schaltverstärkern SV1, SV2, SV3 zugeführt werden, um ein Abschalten der entsprechenden gesteuerten Schalter bei Überstrom zu ermöglichen. Die Messwiderstände R_{M1}, R_{M2}, R_{M3} können seitens des Benutzers auf den jeweils gewünschten Nennstrom eingestellt werden.

Tatsächlich sieht die Erfindung bei diesem Ausführungsbeispiel auch noch Zeitkonstanten bei dem Öffnen der gesteuerten Schalter in Abhängigkeit von der Überschreitung des Nennstromes vor, wozu auch auf Fig. 7 verwiesen wird. Wenn der Strom an einem der Ausgänge 100 % des an einem einstellbaren Messwiderstand eingestellten Nennstromes erreicht, so wird ein Zeitglied gestartet, welches beispielsweise gemäß Fig. 7 erst nach fünf Sekunden den zugehörigen gesteuerten Schalter öffnet. Geht innerhalb dieser Zeit von fünf Sekunden der Strom jedoch zurück, so erfolgt keine Auslösung.

Erreicht der Strom an einem der Ausgänge einen Wert von beispielweise 130 % des Nennstroms, wie in Fig. 7 gezeigt, so kann über eine in Fig. 3 nicht näher gezeigte Regelschaltung dafür gesorgt werden, dass der Strom auf diesen Wert begrenzt wird, wobei gleichzeitig ein zweites Zeitglied gestartet wird, welches dafür sorgt, dass nach wesentlich kürzerer Zeit, als in dem vorhin geschilderten Fall, z. B. gemäß Fig. 7 nach 0,1 Sekunden, der entsprechende gesteuerte Schalter geöffnet wird.

Bei einer weiteren Modifikation der Erfindung wird berücksichtigt, dass der Spannungswandler SPW bis zu einem gewissen Maximalstrom zwar eine konstante Ausgangsspannung liefert, bei weiterem Ansteigen des Stroms die Ausgangsspannung jedoch absinkt. Gemäß der Variante ist nun vorgesehen, dass bei einem solchen Absinken der Speisespannung Uₛ, welches - wie in Fig. 3 angedeutet - beispielsweise durch einen Komparator KOM und eine Referenzspannung U_{Ref} festgestellt werden kann und bei gleichzeitigem Überschreiten des Nennstromes an einem der Ausgänge A₁ ... A₃, ein Öffnen des gesteuerten Schalters in diesem Zweig erfolgt, um ein Zusammenbrechen des gesamten Systems zu vermeiden. In Fig. 3 ist diese Verknüpfung mit einem logischen "UND"-Kästchen angedeutet, wobei Fig. 3 um die Übersichtlichkeit zu wahren, nur die Überwachung des Ausganges A₃ darstellt. Selbstverständlich werden die anderen Ausgänge, die in der Praxis auch eine weitaus höhere Anzahl als drei erreichen können, gleichfalls überwacht. Wie in Fig. 3 dargestellt, kann das Öffnen der gesteuerten Schalter für einen der drei Ausgänge mit Hilfe beispielsweise von Lämpchen L1, L2, L3 angezeigt werden. Wenngleich die obgenannten Zeitglieder in Fig. 3 nicht eingezeichnet sind, gibt es für den Fachmann verschiedene Möglichkeiten dieses zeit- und stromabhängige Auslösen zu realisieren. Die Zeitglieder können beispielsweise in Komparatoren oder Schaltverstärkern enthalten sein und digital bzw. gegebenenfalls auch analog realisiert werden.

Bei der Schaltung nach Fig. 4 ist eine Überwachung einzelner Ausgangsspannungen vorgesehen. Genauer gesagt weist die Schaltung einen nicht abgesicherten, direkten Ausgang A₀ mit der Speisespannung U_{S} und zwei Ausgänge A₁, A₂ auf, die über gesteuerte Schalter SW1, SW2 an der Speisespannung Us liegen und Ausgangsspannungen U_{A1}, U_{A2} führen.

Bei der Schaltung nach Fig. 4 wird jede der beiden Ausgangsspannungen U_{A1}, U_{A2} überwacht, wozu beispielsweise in der Überwachungseinheit UWE zwei Komparatoren K01, K02 zum Vergleich mit Referenzspannungen U_{Ref1}, U_{Ref2} vorgesehen sind. Sinkt beispielsweise die Spannung U_{A2} an dem Ausgang A₂ um einen vorgegebenen Wert ΔU_{A2} ab, so schaltet der Komparator K02 durch und öffnet den gesteuerten Schalter SW2 (Fig. 8). Auch hier erfolgt ein individuelles Abschalten der einzelnen Ausgänge A₁ und A₂, doch ist bei der Ausführung nach Fig. 2 in erster Linie eine Strommessung Abschaltkriterium, wogegen bei den Ausführungen nach Fig. 1 und Fig. 4 eine Spannungsmessung bzw. -überwachung im Vordergrund steht.

Beim Einsatz der Erfindung geht man von der Tatsache aus, dass beispielsweise der überwiegendste Teil auftretender Kurzschlüsse oder Überlastungen von Ausgabebereichen herrühren, d. h. von Baugruppen, welche die Speisespannung zur Aktivierung von Lampen, Ventilen, Relais, Motoren etc. benötigen, wogegen Eingabebereiche, das sind Baugruppen, welche Zustände einer Anlage oder eines Systems erfassen, ebenso wie Mikroprozessorbaugruppen in den seltensten Fällen Anlass für Kurzschlüsse oder Überlast geben. Je nach der zu speisenden Anlage, den Schutzprioritäten und der verwendeten Speisespannung wird man eine geeignete Variante der Erfindung wählen oder auch Varianten kombinieren. Dabei ist anzumerken, dass die zu überwachenden Spannungen nicht nur an Messwiderständen, sondern z. B. auch an Induktivitäten auftreten können und - falls erforderlich - die Schaltungen leicht so modifizierbar sind, dass eine, z. B. positive Ausgangsspannung mit mehreren, erfindungsgemäß abgesicherten Masseanschlüssen möglich ist

## Patentansprüche

1. Überwachungseinheit (UWE) für Stromversorgungen, bei welcher eine Speisespannung (Us) über zumindest einen gesteuerten Schalter (SW1, SW2, SW3) zu zwei oder mehr Ausgängen (A₁, A₂, A₃) geführt ist und
die Überwachungseinheit (UWE) dazu eingerichtet ist, bei Änderungen von Spannungen und/oder Strömen über vorgebbare Toleranzwerte an zumindest einen Schalter ein Abschaltsignal (s₁, s₂, s₃) zu liefern,
**dadurch gekennzeichnet, dass**
die Überwachungseinheit (UWE) zum Vergleich der Speisespannung (Us) mit einer Referenzspannung (U_{Ref} )und zur Abgabe eines Abschaltsignals (s₁, s₂, s₃) an zumindest einen Schalter (SW1, SW2, SW3) eingerichtet ist, falls die Speisespannung um einen vorgebbaren Wert (ΔU_{S}) absinkt (Fig. 1, 3, 5).

2. Überwachungseinheit (UWE) nach Anspruch 1, **dadurch gekennzeichnet, dass** sie dazu eingerichtet ist, Abschaltsignale (s₁, s₂, s₃) an mehrere Schalter (SW1, SW2, SW3) zu liefern, nämlich bei Absinken der Speisespannung (U_{S}) um einen vorgebbaren Wert (ΔU₂) an einen ersten Schalter (S1), sodann an einen zweiten Schalter (SL) usf., jedoch bei einem Ansteigen der Speisespannung die Abschaltvorgänge zu beenden (Fig. 1, 5).

3. Überwachungseinheit (UEW) nach Anspruch 1 oder 2, **dadurch gekennzeichnet, dass** sie auch zum Vergleich der an den gesteuerten Schaltern (SW1, SW2, SW3) liegenden Restspannungen (U_{R1}, U_{R2,} U_{R3}) und zur Abgabe eines Abschaltsignals an Schalter eingerichtet ist, deren Restspannung über einen vorgebbaren Maximalwert (U_{R2max}) steigt (Fig. 2,6).

4. Überwachungseinheit (UEW) nach einem der Ansprüche 1 bis 3, **dadurch gekennzeichnet, dass** sie auch zum Vergleich der nach den gesteuerten Schaltern (SW1, SW2, SW3) liegenden Ausgangsspannungen (U_{A1}, U_{A2}) mit Referenzspannungen (U_{RG1}, U_{RG2}) und zur Abgabe eines Abschaltsignals (s₁, s₂) an Schalter eingerichtet ist, deren zugehörige Ausgangsspannung (U_{A1}, U_{A2}) unter einen vorgebbaren Wert (ΔU_{A2}) absinkt (Fig. 4, 8).

5. Überwachungseinheit (UEW) nach einem der Ansprüche 1 bis 4, **dadurch gekennzeichnet, dass** die Speisespannung (U_{S}) zu einem Ausgang (A₀) direkt geführt ist (Fig. 1,4).

6. Überwachungseinheit (UEW) nach Anspruch 1, **dadurch gekennzeichnet, dass** mindestens einem Ausgang ein Stromfühler (R_{M1}, R_{M2}, R_{M3}) zugeordnet ist und die Überwachungseinheit (UWE) dazu eingerichtet ist, von den Stromfühlem gelieferte Signale (Uᵢ₃) zu überwachen und den gesteuerten Schalter (SW1 ... SW3) in einem zu einem Ausgang (A₁, A₂, A₃) führenden Zweig zu öffnen, falls einerseits die Speisespannung unter einen vorgebbaren Grenzwert abgefallen ist, und andererseits der Strom in diesem Zweig einen vorgebbaren Grenzwert überstiegen hat (Fig. 3).

7. Überwachungseinheit (UEW) nach Anspruch 6, **dadurch gekennzeichnet, dass** die Überwachungseinheit dazu eingerichtet ist, den zugehörigen Schalter (SW1 ... SW3) zeitverzögert zu öffnen (Fig. 7).

8. Überwachungseinheit (UEW) nach Anspruch 7, **dadurch gekennzeichnet, dass** die Zeitverzögerung von dem Ausmaß der Überschreitung eines Nennstroms abhängig ist (Fig. 3).

9. Überwachungseinheit (UEW) nach einem der Ansprüche 6 bis 8, **dadurch gekennzeichnet, dass** die Stromfühler einstellbare Widerstände (R_{M1}, R_{M2}, R_{M3}) sind.

10. Stromversorgungsgerät mit einer Überwachungseinheit nach einem der Ansprüche 1 bis 9.

## Claims

1. Monitoring unit (UWE) for power supplies, in which a supply voltage (U_{S}) is supplied via at least one controlled switch (SW1, SW2, SW3) to two or more outputs (A₁, A₂, A₃) and
the monitoring unit (UWE) is arranged to send a shut-off signal (s₁, s₂, s₃) to at least one switch in the event of changes in voltages and/or currents beyond predeterminable
tolerance values,
**characterised in that**
the monitoring unit (UWE) is arranged to compare the supply voltage (U_{S}) with a reference voltage (U_{Ref}) and to output a shut-off signal (s₁, s₂, s₃) to at least one switch (SW1, SW2, SW3) if the supply voltage falls by a predeterminable value (ΔU_{S}) (Figure 1,3,5).

2. Monitoring unit (UWE) as claimed in claim 1, **characterised in that** it is arranged to deliver shut-off signals (s₁, s₂, s₃) to a plurality of switches (SW1, SW2, SW3), namely if the supply voltage (U_{S}) falls by a predeterminable value (ΔU₂), to send shut-off signals to a first switch (S1), then to a second switch (SL), etc, but to terminate the shut-off procedures if the supply voltage rises (Figure 1,5).

3. Monitoring unit (UWE) as claimed in claim 1 or 2, **characterised in that** it is also arranged to compare the residual voltages (U_{R1}, U_{R2}, U_{R3}) at the controlled switches (SW1, SW2, SW3) and to output a shut-off signal to switches of which the residual voltage increases above a predeterminable maximum value (U_{R2max}) (Figure 2, 6).

4. Monitoring unit (UWE) as claimed in any one of claims 1 to 3, **characterised in that** it is also arranged to compare the output voltages (U_{A1}, U_{A2}) at the controlled switches (SW1, SW2, SW3) with reference voltages (U_{RG1}, U_{RG2}) and to output a shut-off signal (s₁, s₂) to switches of which the associated output voltage (U_{A1}, U_{A2}) falls below a predeterminable value (ΔU_{A2}) (Figure 4, 8).

5. Monitoring unit (UWE) as claimed in any one of claims 1 to 4, **characterised in that** the supply voltage (U_{S}) is supplied directly to an output (A₀) (Figure 1, 4).

6. Monitoring unit (UWE) as claimed in claim 1, **characterised in that** at least one output is allocated a current sensor (R_{M1}, R_{M2}, R_{M3}) and the monitoring unit (UWE) is arranged to monitor signals (Uᵢ₃) supplied by the current sensors and to open the controlled switch (SW1 ... SW3) in a branch leading to an output (A₁, A₂, A₃) if on the one hand the voltage supply has fallen below a predeterminable limit value and on the other hand the current in this branch has exceeded a predeterminable limit value (Figure 3).

7. Monitoring unit (UWE) as claimed in claim 6, **characterised in that** the monitoring unit is arranged to open the associated switch (SW1 ... SW3) in a time-delayed manner (Figure 7).

8. Monitoring unit (UWE) as claimed in claim 7, **characterised in that** the time delay is dependent upon the extent by which a nominal current is exceeded (Figure 3).

9. Monitoring unit (UWE) as claimed in any one of claims 6 to 8, **characterised in that** the current sensors are adjustable resistors (R_{M1}, R_{M2}, R_{M3}).

10. Power supply device with a monitoring unit as claimed in any one of claims 1 to 9.

## Revendications

1. Unité de surveillance (UWE) pour des alimentations en courant, pour laquelle une tension d'alimentation (Uₛ) est acheminée par au moins un interrupteur commandé (SW1, SW2, SW3) vers deux ou plusieurs sorties (A₁, A₂, A₃) et l'unité de surveillance (UWE) est configurée pour que, lors de modifications des tensions et / ou des intensités au-delà de valeurs de tolérance spécifiables, un signal de coupure (s₁, s₂, s₃) soit délivré à au moins un interrupteur,
**caractérisée en ce que**
l'unité de surveillance (UWE) est configurée pour la comparaison de la tension d'alimentation (Uₛ) avec une tension de référence (U_{Ref}), et pour l'émission d'un signal de coupure (s₁, s₂, s₃) à au moins un interrupteur (SW1, SW2, SW3) si la tension d'alimentation chute d'une valeur spécifiable (ΔUₛ) (figures 1, 3, 5).

2. Unité de surveillance (UWE) selon la revendication 1, **caractérisée en ce qu'**elle est configurée pour délivrer des signaux de coupure (s₁, s₂, s₃) à plusieurs interrupteurs (SW1, SW2, SW3), en l'occurrence à un premier interrupteur (S1) lors de la chute de la tension d'alimentation (Uₛ) d'une valeur spécifiable (ΔU₂), puis à un deuxième interrupteur (SL), etc., mais à interrompre les processus de coupure en cas d'augmentation de la tension d'alimentation (figures 1 et 5).

3. Unité de surveillance (UWE) selon la revendication 1 ou 2, **caractérisée en ce qu'**elle est configurée pour la comparaison des tensions résiduelles (U_{R1}, U_{R2}, U_{R3}) présentes sur les interrupteurs commandés (SW1, SW2, SW3) et pour la délivrance d'un signal de coupure aux interrupteurs dont la tension résiduelle monte au-delà d'une valeur maximale (U_{R2max}) (figures 2 et 6).

4. Unité de surveillance (UWE) selon l'une quelconque des revendications 1 à 3, **caractérisée en ce qu'**elle est aussi configurée pour la comparaison des tensions de sortie (U_{A1}, U_{A2}) présentes en aval des interrupteurs commandés (SW1, SW2, SW3) avec des tensions de référence (U_{RG1}, U_{RG2}) et pour la délivrance d'un signal de coupure (s₁, s₂) à des interrupteurs dont la tension de sortie correspondante (U_{A1}, U_{A2}) chute en dessous d'une valeur spécifiable (ΔU_{A2}) (figures 4 et 8).

5. Unité de surveillance (UWE) selon l'une quelconque des revendications 1 à 4, **caractérisée en ce que** la tension d'alimentation (Uₛ) est acheminée directement vers une sortie (A₀) (figures 1 et 4).

6. Unité de surveillance (UWE) selon la revendication 1, **caractérisée en ce qu'**un détecteur de courant (R_{M1}, R_{M2}, R_{M3}) est affecté à au moins une sortie et **en ce que** l'unité de surveillance (UWE) est configurée pour surveiller les signaux (Uᵢ₃) délivrés par les détecteurs de courant et pour ouvrir l'interrupteur commandé (SW1 à SW3) dans une branche menant à une sortie (A₁, A₂, A₃) si, d'un côté, la tension d'alimentation est tombée en dessous d'une valeur limite spécifiable, et d'un autre côté si l'intensité dans cette branche a dépassé une valeur limite spécifiable (figure 3).

7. Unité de surveillance (UWE) selon la revendication 6, **caractérisée en ce que** l'unité de surveillance est configurée pour ouvrir l'interrupteur correspondant (SW1 à SW3) avec temporisation (figure 7).

8. Unité de surveillance (UWE) selon la revendication 7, **caractérisée en ce que** la temporisation dépend de la valeur du dépassement d'une intensité nominale (figure 3).

9. Unité de surveillance (UWE) selon l'une quelconque des revendications 6 à 8, **caractérisée en ce que** les détecteurs de courant sont des résistances réglables (R_{M1}, R_{M1}, R_{M3}).

10. Appareil d'alimentation en courant avec une unité de surveillance selon l'une quelconque des revendications 1 à 9.
